# EUROPÄISCHE PATENTANMELDUNG

(11) **EP 0 556 785 A1**
(43) Veröffentlichungstag der Anmeldung: **25.08.1993**
(21) Anmeldenummer: 93102432.7
(22) Anmeldetag: 17.02.1993
(51) Int. Cl.: B28C 7/16, B01F 15/04

(54) **Vorrichtung zum pneumatischen Ausbringen von hydromechanisch im Dichtstrom gefördertem Beton**

(30) Priorität: 20.02.1992 DE 4205144
(71) Anmelder: Friedrich Wilh. Schwing GmbH, D-44653 Herne (DE)
(72) Erfinder: v. Eckardstein, Karl Ernst, W-4750 Unna (DE)
(74) Vertreter: Herrmann-Trentepohl, Werner, Dipl.-Ing.

(57) **Zusammenfassung**

Die Erfindung betrifft eine Vorrichtung zum pneumatischen Ausbringen von hydromechanisch im Dichtstrom gefördertem Beton (2) mit einer Betonpumpe (1) zur hydromechanischen Förderung und einer Erstarrungsbeschleuniger-Dosiereinrichtung. Um eine Vorrichtung zur Verfügung zu stellen, mit der gleichzeitig mehrere Zusatzmittel zudosiert werden können, die jeweils von einem Minimal- bis zu einem Maximalwert einstellbar sind, ist vorgesehen, daß wenigstens eine weitere Zusatzmittel-Dosiereinrichtung (500, 501, 502) mit einer Linearkolbenpumpe (470, 471, 472) vorgesehen ist, die ebenfalls mit dem Linearkolbenantrieb (34-37) der Vorrichtung verbunden ist, wobei in der Förderleitung (480, 481, 482) jeder weiteren Dosiereinrichtung (500, 501, 502) ein Wegeventil (490, 491, 492) zur Umsteuerung des Dosiermittels in jeweils einen Dosiermitteltank (460, 461, 462) oder in die Dosiermittelförderleitung (8, 81, 82) eingebaut ist, wobei die Wegeventile (490, 491, 492) mit dem im Kolbenraum der Arbeitszylinder (25, 26) herrschenden Hydraulik-Mediumdruck beaufschlagt sind.

## Beschreibung

Die Erfindung betrifft eine Vorrichtung zum pneumatischen Ausbringen von hydromechanisch im Dichtstrom gefördertem Beton gemäß dem Oberbegriff des Anspruchs 1.

Eine derartige Vorrichtung ist bereits aus der DE-OS 39 27 332 bekannt. Die dort beschriebene Ausbringvorrichtung ist mit einer Betonpumpe zur hydromechanischen Förderung versehen, welche mit einem hydraulischen Antrieb aus wenigstens zwei Zylindern mit gegenläufigen Kolben betrieben wird. Die Pumpe wird durch einen Verdrängerkreis gleichlaufgesteuert. Des weiteren weist die bekannte Vorrichtung eine Dosiereinrichtung für einen Erstarrungsbeschleuniger auf. Der Antrieb der Dosiereinrichtung ist in den hydraulischen Kreislauf des Pumpenantriebes eingeschaltet und als Linearkolbenantrieb ausgebildet. Die Schluckmenge des Linearkolbenantriebs entspricht der Verdrängungsmenge der Arbeitskolben des Verdrängerkreises. Als Dosiereinrichtung dient eine Linearkolbenpumpe, wobei der Linearkolbenantrieb und die Linearkolbenpumpe miteinander verbunden sind und an der Verbindung von Antrieb und Pumpe ein Schieber vorgesehen ist. Des weiteren ist in der Förderleitung der Dosiereinrichtung ein Wegeventil zur Umsteuerung des Erstarrungsbeschleunigerflusses in einen Erstarrungsbeschleunigertank oder in die Zusatzmittelförderleitung eingebaut, wobei das Ventil mit dem im Kolbenraum der Arbeitszylinder herrschenden Hydraulik-Mediumdruck beaufschlagt ist.

Die bekannte Vorrichtung mit der Erstarrungsbeschleuniger-Dosiereinrichtung liefert in der Praxis bereits gute Ergebnisse beim Ausbringen von Beton. Mit Hilfe des Schiebers zwischen Linearkolbenantrieb und Linearkolbenpumpe kann das Verhältnis der Menge des Erstarrungsbeschleunigers zur Betonfördermenge in einem Bereich von einem Minimalwert bis zu einem Maximalwert eingestellt werden.

Allerdings hat es sich gezeigt, daß es in der Praxis häufiger vorkommt, daß dem auszubringenden Beton aus den verschiedensten Gründen außer dem Erstarrungsbeschleuniger gleichzeitig ein anderes Zusatz- oder Dosiermittel zugegeben werden muß und daß es erforderlich ist, den Erstarrungsbeschleuniger und auch andere Dosier- oder Zusatzmittel von einem Minimal- bis zu einem Maximalwert zuzugeben.

Aufgabe der Erfindung ist es, die bekannte Vorrichtung derart weiterzubilden, daß auch andere Zusatzmittel in jeweils vorgegebenen oder gewünschten Verhältnissen zur Betonfördermenge zugeführt werden können.

Diese Aufgabe wird erfindungsgemäß im wesentlichen durch die kennzeichnenden Merkmale des Anspruchs 1 gelöst. Weitere Vorteile der Erfindung ergeben sich aus den Unteransprüchen.

Gemäß der Erfindung ist vorgesehen, daß wenigstens eine weitere Zusatzmittel-Dosiereinrichtung mit einer Linearkolbenpumpe vorgesehen ist, welche ebenfalls mit dem Linearkolbenantrieb verbunden ist. In der Förderleitung jeder weiteren Dosiereinrichtung ist ebenfalls ein Wegeventil zur Umsteuerung des weiteren Dosier- oder Zusatzmittels in jeweils einen weiteren Dosiermitteltank oder in eine Dosiermittelförderleitung eingebaut. Auch diese Wegeventile sind mit dem im Kolbenraum der Arbeitszylinder herrschenden Hydraulik-Mediumdruck beaufschlagt.

Die erfindungsgemäße Vorrichtung bietet den Vorteil, daß nunmehr eine Mehrzahl von zusätzlichen Dosiereinrichtungen vorgesehen sind, so daß je nach den entsprechenden Anforderungen beim Betonspritzen verschiedene Zusatz- oder Dosiermittel gleichzeitig zugegeben werden können. Da die Linearkolbenpumpen der weiteren Dosiereinrichtungen ebenfalls mit dem Linearkolbenantrieb verbunden sind, werden die einzelnen Zusatz- oder Dosiermittel hierbei in Abhängigkeit der Förderstrommenge des geförderten Betons gesteuert. Wird kein Beton gefördert bzw. ausgebracht, so wird das Dosier- oder Zusatzmittel in den jeweiligen Dosiermitteltank zurückgefördert. Da jede Dosiereinrichtung einen eigenen Dosiermitteltank aufweist, findet keine Vermischung der einzelnen Dosiermittel statt, wenn kein Beton gefördert wird.

In der Praxis hat es sich gezeigt, daß es besonders zweckmäßig ist, wenn jede Dosiereinrichtung über eine eigene separate Dosiermittelförderleitung mit der Spritzdüse verbunden ist. Diese Ausgestaltung bietet sich deshalb besonders an, da verschiedene Dosiermittel häufig in einer kurzen Reaktionszeit miteinander reagieren und sich beispielsweise in einer gemeinsamen Förderleitung absetzen und diese auf diese Weise zusetzen könnten. Um derartige chemische Reaktionen zwischen den einzelnen Zusatzmitteln zu verhindern, und die gewünschte Wirkung jedes einzelnen Zusatzmittels zu erreichen, ist das genannte Merkmal zweckmäßigerweise vorgesehen.

Allerdings kann es sich bei verschiedenen Anwendungen auch anbieten, daß verschiedene Dosiermittel vor Zuführung zur Spritzdüse zusammengeführt werden, da gerade eine bestimmte Reaktion erwünscht ist und die Reaktion zwischen diesen Zusatzmitteln nicht sofort abläuft. Um eine derartige Reaktion von zwei Zusatzmitteln zu erreichen, ist gemäß Anspruch 3 vorgesehen, daß die einzelnen Förderleitungen miteinander verbindbar sind. Hierbei kann die gewünschte Reaktion dann in der gemeinsamen Zusatzförderleitung erfolgen.

Um in einfacher Weise die Verbindung zwischen Linearkolbenantrieb und den weiteren Dosiereinrichtungen auszubilden, ist vorgesehen, daß an den Kolben des Linearkolbenantriebs eine Schwinge angekoppelt ist, mit welcher die weiteren Dosiereinrichtungen verbunden sind. Hierdurch lassen sich sämtliche Dosiereinrichtungen in Abhängigkeit des Kolbenhubes des Linearkolbenantriebs und somit in Abhängigkeit von der Fördermenge des geförderten Betons in einfacher Weise steuern.

Die Verbindung zwischen dem Linearkolbenantrieb bzw. der Schwinge läßt sich in einfacher Weise dadurch realisieren, daß der Kolben der Linearkolbenpumpe der weiteren Dosiereinrichtung mit einer Kurbelschwinge gelenkig verbunden ist, welche wiederum mit der Schwinge des Linearkolbenantriebs verbunden ist. Auf diese Weise kann eine einfache mechanische Steuerung sämtlicher Dosiereinrichtungen erfolgen.

Um jede einzelne der weiteren Dosiereinrichtungen von einem Minimalwert zu einem Maximalwert steuern zu können, was gegebenenfalls erforderlich ist, da nicht immer sämtliche Zusatzmittel benötigt werden, sieht Anspruch 6 vor, daß ein Schieber entlang der Kurbelschwinge der weiteren Dosiereinrichtungen verschiebbar ist, welcher mit der Linearkolbenpumpe der weiteren Dosiereinrichtung verbunden ist.

Um jedoch die Dosiermenge der weiteren Dosiereinrichtung nicht nur auf einen bestimmten Minimalwert, sondern auch auf Null dosieren zu können, sieht Anspruch 7 vorteilhafterweise vor, daß eine Führung für den Schieber vorgesehen ist, die mit ihrem einen Ende am gestellfesten Anlenkpunkt, der Kurbelschwinge verbunden ist. Hierdurch kann der Schieber bis zu dem Anlenkpunkt der Kurbelschwinge bewegt werden, so daß keine Auslenkung infolge der Hin- und Herbewegung des Linearkolbenantriebs mehr erfolgt, was gleichbedeutend mit der Einstellung der Förderung von Dosiermittel ist. Durch diese besondere Anordnung kann nunmehr je nach geforderten Anforderungen der Betonqualität ein Zusatzmittel beispielsweise überhaupt nicht, ein anderes lediglich mit einer geringen Menge und ein drittes mit einem Maximalwert zugegeben werden. Ebenfalls kann vorgesehen sein, daß keines der Dosiermittel zugegeben wird, was in bestimmten Anwendungsgebieten auch der Fall sein kann.

Eine einfache Ausgestaltung der erfindungsgemäßen mechanischen Verbindung der Dosiereinrichtungen mit dem Linearkolbenantrieb erfolgt dadurch, daß die Schwinge als langgestreckte Stange oder dergleichen ausgebildet ist. Bei dieser Ausführungsform ist jede Kurbelschwinge der weiteren Dosiereinrichtungen an der langgestreckten Schwinge des Linearkolbenantriebs angelenkt.

In einer anderen Ausführungsform ist vorgesehen, daß die Kurbelschwingen der weiteren Dosiereinrichtungen in Form eines einheitlichen Schalters ausgebildet sind. Hierbei ist dann die Schwinge des Linearkolbenantriebs mit dem Schalter verbunden, so daß auf diese Weise eine Hin- und Herbewegung erfolgt.

Weitere Merkmale, Vorteile und Anwendungsmöglichkeiten der vorliegenden Erfindung ergeben sich aus der Beschreibung von Ausführungsbeispielen anhand der Zeichnung und anhand der Zeichnung selbst.

Es zeigen:
- Fig. 1: eine erste Ausführungsform der Erfindung, bei der die Betonpumpe, die Spritzeinrichtung und die erfindungsgemäßen Dosiereinrichtungen wiedergegeben sind,
- Fig. 2: eine zweite Ausführungsform der Erfindung, bei der lediglich eine Dosiereinrichtung dargestellt ist und
- Fig. 3: eine Ausführungsform eines erfindungsgemäßen Schalters mit Kurbelschwingen.

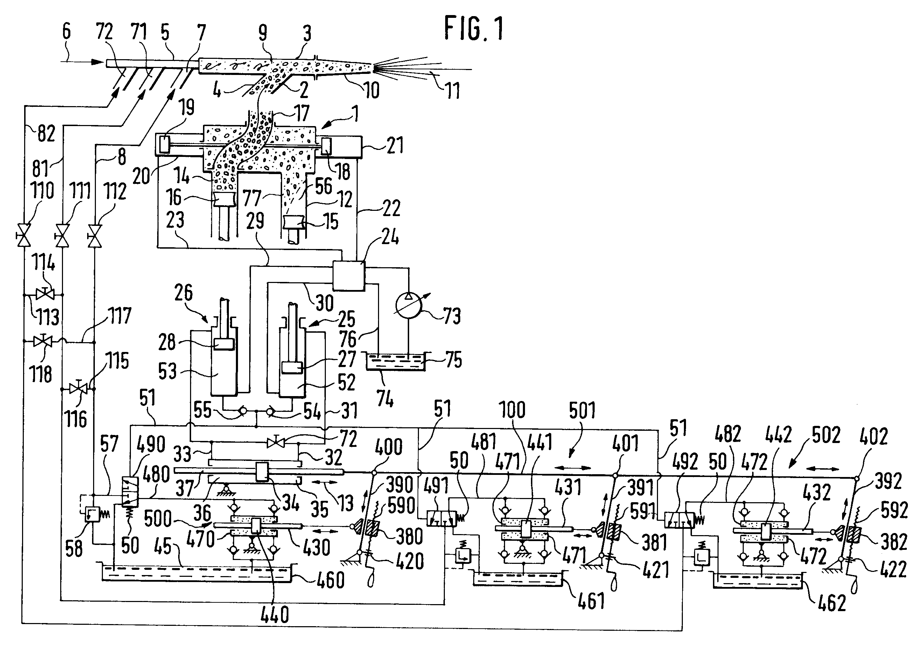

Die in Fig. 1 dargestellte erste Ausführungsform der Erfindung entspricht bis auf die Dosiereinrichtungen der aus der DE-OS 39 27 332 bekannten Betonspritzmaschine. Zur Verdeutlichung des Erfindungsgedankens sei jedoch im folgenden noch einmal auf die einzelnen Elemente und deren Funktion eingegangen.

Die in Fig. 1 nur mit ihren wesentlichen Teilen wiedergegebene an sich bekannte Betonpumpe 1 fördert Beton 2 im Dichtstrom in ein Düsenrohr 3 durch einen Schlauchanschluß 4. Das Düsenrohr 3 durchdringt einen Rohrdeckel und endet an einer Düse 5. In Richtung des Pfeiles 6 wird Druckluft zugeführt, welches verschiedene Zusatzmittel mitreißt. Im vorliegenden Fall sind drei Zusatzmittel vorgesehen; selbstverständlich können aber auch mehr als drei Zusatzmittel zugeführt werden. Die Zusatzmittel erreichen die Düse 5 durch Nippel 7, 71 und 72 aus entsprechenden Leitungen 8, 81 und 82, wobei die Leitung 8 dem Nippel 7, die Leitung 81 dem Nippel 71 und die Leitung 82 dem Nippel 72 entsprechendes Dosier- oder Zusatzmittel zuführt. Die von der Düse zerstäubten Zusatz- oder Dosiermittel sind in der Förderluft suspendiert, wenn diese bei 9 auf den Dichtstrom des Betons 2 trifft, der dadurch aufgebrochen wird und unter Druck aus der Düse 10 des Rohres 3 in aufgebrochenem Strahl 11 austritt.

Die Betonpumpe 1 fördert den Beton mit zwei Förderzylindern 12, 14 mit Hilfe von zwei Kolben 15, 16, die den Beton wechselseitig ansaugen und durch ein Schwenkrohr 17 ausdrücken. Im Beispielsfalle der Fig. 1 saugt der Kolben 15 an, während der Kolben 16 ausdrückt. Das Schwenkrohr 17 verbindet die beiden Zylinder 12 und 14 mit der Förderleitung 4 und wird in der jeweiligen Endlage der Kolben umgesteuert. Dies geschieht hydraulisch mit Kolben 18, 19 in Arbeitszylindern 20, 21, die aus Leitungen 22, 23 mit hydraulischem Druckmittel beaufschlagt werden. Die Steuerung 24 sitzt in einem Block.

Zum Antrieb der Kolben 15, 16 über deren Kolbenstangen dienen hydraulische Arbeitszylinder 25, 26, in denen die Antriebskolben 27, 28 wechselseitig hin- und hergehen. Die Beaufschlagung erfolgt auf der vollen Kolbenseite aus den Leitungen 29, 30, welche mit der Steuerung 24 umgeschaltet werden. Den Gleichlauf der Kolben 27, 28 sichert ein Verdrängerkreis 31, welcher an die Arbeitszylinder 25, 26 an der Kolbenstangenseite angeschlossen ist. Der Verdrängerkreis 31 enthält damit das jeweils von einem vorlaufenden Antriebskolben 27, 28 aus dem betreffenden Zylinder 25, 26 verdrängte hydraulische Arbeitsmedium und führt es dem benachbarten Kolben zu.

Aus dem Verdrängerkreis gehen die beiden Leitungen 32, 33 ab, welche die durch einen Linearkolben 34 voneinander getrennten Zylinderräume 35, 36 mit hydraulischem Druckmedium beaufschlagen, das der jeweils verdrängten Menge hinzugefügt ist. Die mit dem Verdränger- bzw. Linearkolben 34 verbundene Kolbenstange 37 gewährleistet volumengleiche Zylinderräume 35, 36, so daß die hin- und hergehende Bewegung des Verdrängerkolbens 34 in Richtung des Pfeiles 13 in beiden Richtungen gewährleistet ist.

Die Kolbenstange 37 ist im Ausführungsbeispiel gemäß Fig. 1 mit einer langgestreckten Schwinge 100 verbunden, an welche an Ankopplungspunkten 400, 401, 402 Kurbelschwingen 390, 391, 392 angekoppelt sind. Die Kurbelschwingen 390, 391, 392 weisen eine gestellfeste Anlenkung 420, 421, 422 auf. Entlang den Kurbelschwingen 390-392 sind jeweils Schieber 380, 381, 382 verschiebbar, welche mit Kolbenstangen 430, 431, 432 von Linearkolben 440, 441, 442 verbunden sind. Die Linearkolben 440, 441, 442 dienen zur Förderung von verschiedenen Zusatz- oder Dosierstoffen, wie beispielsweise Erstarrungsbeschleuniger oder dergleichen aus jeweiligen Tanks 460, 461, 462. Die jeweiligen Förderzylinder 470, 471, 472 sind mit den Tanks auf beiden Seiten mit Leitungszweigen verbunden, die mit Rückschlagventilen versehen sind. Ihnen entsprechen Abzweige mit Rückschlagventilen der Förderleitungen 480, 481, 482, welche jeweils zu einem Wegeventil 490, 491, 492 führen. Die Wegeventile 490-492, welche identisch sind, werden im folgenden nur anhand des Wegeventils 490 beschrieben. Dieses ist auf einer Seite mit einer Rückstellfeder 50 belastet, und wird auf der anderen Seite über eine Leitung 51 beaufschlagt, die den jeweiligen Druck in den Kolbenräumen 52, 53 der Arbeitszylinder 25, 26 wiedergibt. Selbstverständlich sind auch die Wegeventile 491 und 492 über die Leitung 51 mit dem in den Kolbenräumen 52, 53 herrschenden Druck beaufschlagt. Rückschlagventile 54, 55 in den Zweigen der Leitung 51 sorgen dafür, daß der Übertritt von hydraulischem Arbeitsmedium von dem einen in den anderen der Zylinderräume 52, 53 vermieden wird.

Der hydraulische Druckerzeuger 73 für das in einem Tank 74 bereitgehaltene hydraulische Arbeitsmedium 75 der Betonpumpe 1 ist der Steuerung 24 vorgeschaltet, die auch eine Rücklaufsteuerung 76 beeinflußt.

In der wiedergegebenen Stellung der Wegeventile 490, 491, 492 verläuft die Zusatzmittelförderung jeweils aus den Tanks 460, 461, 462 durch die Zylinder 470, 471, 472 jeweils zurück in die Tanks 460, 461, 462, wobei angenommen ist, daß ein Gesamtraum 56 im Betonförderzylinder 12 kompressibel ist. Sobald sich die im Förderzylinder 12 befindliche Betonsäule 77 in Bewegung gesetzt hat, steigt der Druck im Zylinderraum 52 so weit an, daß er das Rückschlagventil 54 öffnet und die Wegeventile 490, 491, 492 beaufschlagt, wodurch die Federn 50 nachgeben und den Weg für das zusätzliche Dosiermittel in die Leitungen 8, 81, 82 freigegeben ist. Im dargestellten Fall wird aus den einzelnen Dosiereinrichtungen 500, 501, 502 unterschiedliches Dosiermittel über die Nippel bzw. Anschlüsse 7, 71, 72 der Spritzdüse 5 zugefördert und mit der Förderluft 6 zerstäubt. Gleichzeitig wird der Beton durch den Anschluß 2 des Düsenrohres 3 gefördert.

In den Leitungen 82, 81, 8 sind als Ventile 110, 111, 112 ausgebildete Verschlußeinrichtungen vorgesehen, welche die einzelnen Förderleitungen absperren können. Des weiteren ist die Leitung 82 mit der Leitung 81 über eine Verbindungsleitung 113 verbunden, wobei die Verbindungsleitung 113 über ein Ventil 114 absperrbar ist. Die Leitung 8 und die Leitung 81 sind über eine Verbindungsleitung 115 miteinander verbunden, welche ebenfalls über ein Ventil 116 verschließbar ist. Schließlich sind auch die Leitungen 8 und 82 über eine Verbindungsleitung 117 miteinander verbunden, welche ebenfalls über ein Ventil 118 verschlossen werden kann. Durch diese Einstellung kann je nach Bedarf Zusatzmittel durch lediglich eine Leitung gefördert werden. Soll beispielsweise das im Tank 460 befindliche Dosiermittel allein und die in den Tanks 461 und 462 befindlichen Dosiermittel zusammen in die Düse 5 gefördert werden, so ist beispielsweise das Ventil 110 zu schließen, während die Ventile 111 und 112 zu öffnen sind. Des weiteren wird das Ventil 114 geöffnet, während das Ventil 116 und das Ventil 118 geschlossen ist. Hierdurch können die Dosiermittel aus den Dosiereinrichtungen 501 und 502 schon vor dem Eintritt in die Düse miteinander reagieren.

Die Einstellung der einzelnen Schieber 380, 381, 382 gibt die Auslenkung der Kurbelschwingen 390, 391, 392 vor und bestimmt ausschließlich die von den Linearkolben 440, 441, 442 jeweils verdrängte Menge an Dosiermittel. Durch Verstellung der Schieber 380, 381, 382 mit Hilfe jeweils einer Spindel 590, 591, 592 läßt sich diese Menge ändern und damit auf die jeweilige gewünschte Betonfördermengen- bzw. Betonqualität einstellen. Die Spindeln 590, 591, 592 sind im Beispielsfall an den Anlenkungspunkten 420, 421, 422 befestigt, so daß auf diese Weise die Dosiermenge der einzelnen Dosiereinrichtungen 500, 501, 502 von einem Minimalwert, d. h. Null, auf eine maximal vorgegebene Menge dosiert werden. Je nach Anwendungsfall und gewünschter Betonqualität kann hierbei also Dosiermittel beispielsweise aus der Dosiereinrichtung 500 zugegeben werden, während das Dosiermittel aus den Dosiereinrichtungen 501 und 502 in nur ganz geringem Maße, wenn überhaupt, zugegeben wird.

In dem Abzweig des Verdrängerkreises 31 ist außer den Zweigen 32, 33 ein Absperrhahn 72 eingebaut, der im geschlossenen, blockierten Zustand über die Zweige 32, 33 den Antrieb des Verdrängerkolbens 34 ermöglicht und im geöffneten Zustand die Abzweige 32, 33 kurzschließt und ein Druck zum Antrieb des Verdrängerkolbens sich nicht aufbauen kann, was zur Folge hat, daß keine Förderung von Dosiermitteln aus den Tanks 460, 461, 462 erfolgt.

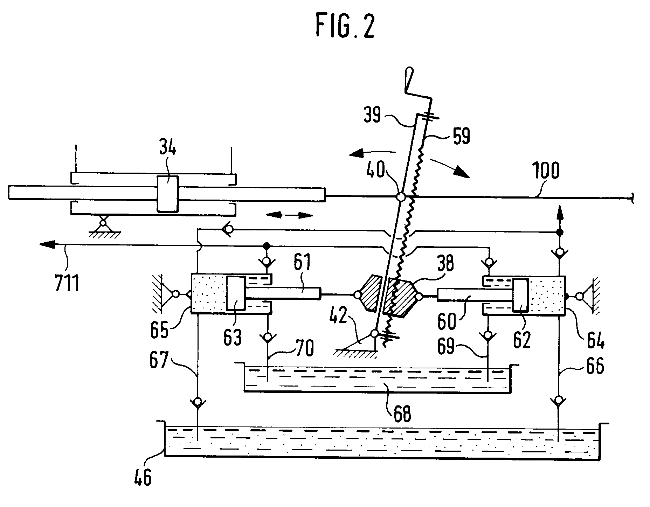

Bei der Ausführungsform nach Fig. 2, bei der nur eine Dosiereinrichtung dargestellt ist, ist an die Kurbelschwinge 39 je eine Kolbenstange 60, 61 bei 62 angelenkt. Die Kurbelschwinge 39 ist an die Schwinge 100 angekoppelt. Die Kolbenstangen 60, 61 sind gegenläufig bewegt, so daß die Schwinge 39 entsprechend dem Pfeil angetrieben ist. Die mit den Kolbenstangen 60 und 61 verbundenen Dosierkolben 62, 63 laufen in einfach wirkenden Dosierzylindern 64, 65 analog den Verhältnissen der Anordnung der Linearkolben 440, 441, 442.

Die Kolbenstangenseiten der Zylinder 64, 65 sind dagegen mit Wasser aus einem Vorratstank 68 über Leitungszweige 69 und 70 beaufschlagt, welche mit Rückschlagventilen gesichert sind. Beim Kolbenrücklauf werden Leitungszweige einer Abwasserleitung 711 beaufschlagt, in denen Rückschlagventile dafür sorgen, daß kein Abwasser angesaugt werden kann. Auf diese Weise werden Anbackungen von dazu neigenden Zusatzmitteln verhindert.

Die Kurbelschwinge 39 ist im Beispielsfalle am Anlenkungspunkt 42 angelenkt. Mit der Schwinge ist auch der sie antreibende Linearkolben 34 bei 40 verbunden. Entlang der Kurbelschwinge 39 ist der Schieber 38 über die Spindel 59 bewegbar. Auf diese Weise kann der Hub der Dosierkolben 62 und 63 auf Null gefahren werden, wenn der Radius zwischen Schieber 38 und Anlenkungspunkt 42 gleich Null ist. Die dargestellte Ausführungsform ist lediglich anhand einer Dosiereinrichtung dargestellt worden. Es versteht sich, daß diese Ausführungsform bei jeder der weiteren Dosiereinrichtungen 501, 502 möglich ist.

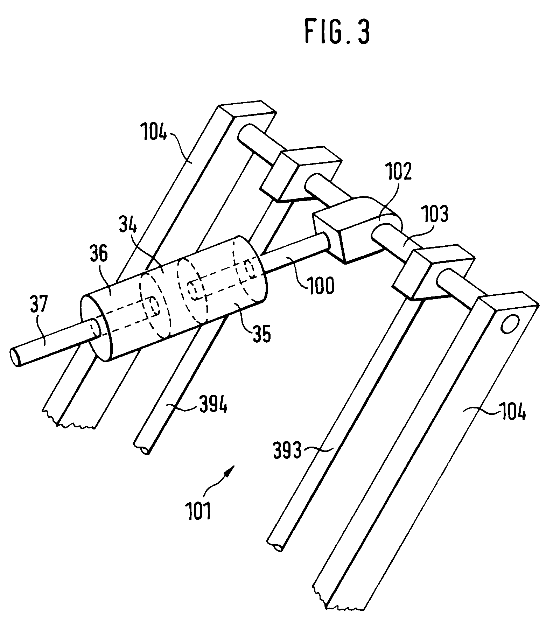

In Fig. 3 ist eine besondere Ausführungsform eines Schalters 101 dargestellt, welcher sich an die Schwinge 100 anschließt. Schwinge 100 und Schalter 101 sind über ein Verbindungselement 102 verbunden, welches an einer Querstange 103 gelenkig angebracht ist. Die Querstange 103, die im wesentlichen horizontal verläuft, wird an ihren Enden von zwei etwa senkrecht verlaufenden Rahmenteilen 104 begrenzt. Die Querstange 103 nimmt aber auch Kurbelschwingen auf, die hier mit 393 und 394 bezeichnet sind. Die Kurbelschwingen 393, 394 verlaufen etwa parallel zu den Rahmenteilen 104. Statt der dargestellten Ausführungsform mit zwei Kurbelschwingen ist selbstverständlich auch eine größere Anzahl von Kurbelschwingen möglich. Diese richtet sich nach der Anzahl der gewünschten und notwendigen Dosiereinrichtungen. Entlang der dargestellten Kurbelschwingen 393, 394 sind nicht dargestellte Schieber verschiebbar. An seinem unteren Ende ist der Schalter 101 gelenkig gelagert, wie dies aus den Fig. 1 und 2 bei 42, 420, 421, 422 hervorgeht.

## Patentansprüche

1. Vorrichtung zum pneumatischen Ausbringen von hydromechanisch im Dichtstrom gefördertem Beton (2) mit einer Betonpumpe (1) zur hydromechanischen Förderung mit einem hydraulischen Antrieb aus wenigstens zwei Zylindern (12, 14) mit gegenläufigen Kolben (15, 16), welche durch einen das von einem Kolben verdrängte Arbeitsmedium führenden Verdrängerkreis (31) gleichlaufgesteuert ist und mit einer Erstarrungsbeschleuniger-Dosiereinrichtung (430-470; 60-70), dessen Antrieb (34-37) in den hydraulischen Kreislauf des Betonpumpenantriebs und des Verdrängerkreises (31) eingeschaltet und als Linearkolbenantrieb (34) ausgebildet ist, dessen Schluckmenge der Verdrängungsmenge der Arbeitskolben (27, 28) entspricht und in beiden Richtungen der Verdrängungsmenge jedes Arbeitskolbens hinzugefügt ist, und daß die Dosiereinrichtung (500) eine Linearkolbenpumpe (430) aufweist, wobei Linearkolbenantrieb (34) und Linearkolbenpumpe (430) miteinander verbunden sind und an der Verbindung ein Schieber (380) vorgesehen ist, wobei in der Förderleitung (480) der Dosiereinrichtung (500) ein Wegeventil (490) zur Umsteuerung des Erstarrungsbeschleunigerflusses in den Zusatzmitteltank (460) oder in die Zusatzmittelförderleitung (8) eingebaut ist, das mit dem im Kolbenraum der Arbeitszylinder herrschenden Hydraulik-Mediumdruck beaufschlagt ist, dadurch gekennzeichnet, daß wenigstens eine weitere Zusatzmittel-Dosiereinrichtung (501, 502) mit einer Linearkolbenpumpe (471, 472) vorgesehen ist, die ebenfalls mit dem Linearkolbenantrieb (34-37) verbunden ist, wobei in einer Förderleitung (481, 482) der weiteren Dosiereinrichtung (501, 502) ebenfalls ein Wegeventil (491, 492) zur Umsteuerung des Dosiermittels in einen Dosiermitteltank (461, 462) oder in eine Dosiermittelförderleitung (81, 82) eingebaut ist, das mit dem im Kolbenraum der Arbeitszylinder (25, 26) herrschenden Hydraulik-Mediumdruck beaufschlagt ist.

2. Vorrichtung nach Anspruch 1, dadurch gekennzeichnet, daß jede Dosiereinrichtung (500, 501, 502) über eine separate Leitung (8, 81, 82) mit der Spritzdüse (5) verbunden ist.

3. Vorrichtung nach Anspruch 1 oder 2, dadurch gekennzeichnet, daß die einzelnen Förderleitungen (480, 481, 482) oder Dosiermittelförderleitungen (8, 81, 82) miteinander verbindbar sind.

4. Vorrichtung nach einem oder mehreren der vorhergehenden Ansprüche, dadurch gekennzeichnet, daß an den Kolben (37) des Linearkolbenantriebs (34-37) eine Schwinge (100) angekoppelt ist, mit welcher die weitere Dosiereinrichtung (500, 501, 502) verbunden ist.

5. Vorrichtung nach einem oder mehreren der vorhergehenden Ansprüche, dadurch gekennzeichnet, daß der Kolben (440, 441, 442) der Linearkolbenpumpe der weiteren Dosiereinrichtung (500, 501, 502) mit einer Kurbelschwinge (390, 391, 392) gelenkig verbunden ist, welche wiederum mit der Schwinge (100) verbunden ist.

6. Vorrichtung nach einem oder mehreren der vorhergehenden Ansprüche, dadurch gekennzeichnet, daß ein Schieber (380, 381, 382) entlang der Kurbelschwinge (390, 391, 392) der weiteren Dosiereinrichtung (500, 501, 502) verschiebbar ist, der mit der Linearkolbenpumpe der weiteren Dosiereinrichtung (500, 501, 502) verbunden ist.

7. Vorrichtung nach einem oder mehreren der vorhergehenden Ansprüche, dadurch gekennzeichnet, daß eine Führung (590, 591, 592) für den Schieber (380, 381, 382) vorgesehen ist, die mit ihrem einen Ende am gestellfesten Anlenkpunkt (420, 421, 422) der Kurbelschwinge (390, 391, 392) verbunden ist.

8. Vorrichtung nach einem oder mehreren der vorhergehenden Ansprüche, dadurch gekennzeichnet, daß die Schwinge (100) als langgestreckte Stange oder dergleichen ausgebildet ist.

9. Vorrichtung nach einem oder mehreren der vorhergehenden Ansprüche, dadurch gekennzeichnet, daß die Kurbelschwinge (393, 394) der weiteren Dosiereinrichtung in Form eines einheitlichen Schalters (101) ausgebildet sind.
